# EUROPEAN PATENT SPECIFICATION

(11) **EP 1 721 020 B1**
(45) Date of publication and mention of the grant of the patent: **09.09.2009**
(21) Application number: 05717738.8
(22) Date of filing: 17.02.2005
(51) Int. Cl.: C22B 9/02, C22B 21/06

(54) **TREATMENT OF METAL MELTS**
BEHANDLUNG VON METALLSCHMELZEN
TRAITEMENT DES BAINS DE METAUX

(30) Priority: 17.02.2004 GB 0403466
(43) Date of publication of application: 15.11.2006
(73) Proprietor: MQP Ltd, Knowle, Solihull West Midlands B93 9EW (GB)
(72) Inventor: Courtenay, John Henry, Knowle, Solihull, West Midlands B93 9EW (GB)
(74) Representative: March, Gary Clifford
(86) International application number: PCT/GB2005/000557
(87) International publication number: WO 2005/080615

(56) References cited:
- EP-A- 0 276 576
- US-A1- 2002 056 677
- PATENT ABSTRACTS OF JAPAN vol. 007, no. 077 (C-159), 30 March 1983 (1983-03-30) -& JP 58 009946 A (KOBE SEIKOSHO KK), 20 January 1983 (1983-01-20)
- SCHNEIDER W ET AL: "UNTERSUCHUNG DER WIRKSAMKEIT VERSCHIEDENER FILTERTYPEN FUER DIE FILTRATION VON ALUMINIUMSCHMELZEN, TEIL I" ALUMINIUM, ALUMINIUM VERLAG, DUESSELDORF, DE, vol. 74, no. 1/2, January 1998 (1998-01), pages 40-44, XP009008168 ISSN: 0002-6689

## Description

It is known to remove both solid and gaseous inclusions from metal melts before they are cast in order to improve the quality of the casting. Several techniques are available for this purpose and one involves passing the liquid metal through the pores of a porous filter and then adding a grain refining agent.

US-A-4872908 discloses a means of improving filtration by predisposing a pre wetted additive on the surface of a ceramic foam filter with the objective of promoting the formation of a stable filter cake leading to improved filtration. This patent does not, however, take account of the role of grain refiners in destroying the development of filter cakes and characteristics of the filter aperture required in the promotion of filter cake formation.

US-A-2002/005667 describes a three chamber filter assembly allowing addition of grain refiner rod into an intermediate chamber between the two filter chambers, the first being a ceramic foam filter whilst the second consists of a small filter bed containing spheres of alumina. Whilst the arrangement disclosed theoretically permits re-use of the first ceramic foam filter, it does not address the issue of how the rate of build up of the filter cake is to be controlled. If the filter cake build up is not controlled, this can lead to premature blocking of the filter. Moreover, bed filters of the type forming the secondary filter bed, are known to be complicated and expensive to maintain and in addition may encounter operational difficulties arising from the release of agglomerated grain refiner particles.

The invention is concerned with this latter technique and especially seeks to improve filtration efficiency and to prolong the life of the filter by controlling the filtration characteristics of the filter cake that forms on the filter, such as filter cake accumulation.

In one aspect the invention provides a method of refining a metal melt comprising passing liquid metal through a porous filter whilst adding filter cake forming agent to a flow of liquid metal, subjecting the filtered metal to grain refinement by addition of grain refining agent with simultaneous admixing of liquid metal with said grain refining agent followed by separation of at least some particulate matter from the flow of liquid metal wherein the admixing of liquid metal and separation of the particulate matter is effected through liquid metal flow modification and the liquid metal flow is subjected to only one filtration stage.

In another aspect the invention provides apparatus for carrying into effect a method as claimed in any one of Claims 1 to 11 the apparatus comprising a primary compartment receiving an inlet flow of liquid metal and including filtration means in the form of a porous filter adapted to support a build-up of filter cake, means introducing into the said primary compartment filter cake controlling agent, and a secondary compartment adjacent to or spaced from the primary compartment receiving a flow of filtered liquid metal and including an inlet for grain refining agent, the apparatus incorporating means for admixing of the flowing filtered liquid metal with introduced grain refining agent and separating at least some particulate matter from the filtered and grain refined liquid metal flow after admixture with the grain refining agent by liquid metal flow modification, wherein the apparatus contains a single filtration means.

Further preferred and optional features are defined in the sub claims.

The metal to be treated may typically be a light metal such as aluminium or its alloys or any other metal from which inclusions need to be reduced or removed before grain refinement.

The porous filter may conveniently comprise a ceramic plate or block which has been formed by impregnating a sponge such as a polyurethane sponge and then burning away the organic material to leave a foraminferous structure. The pore dimensions will preferably be within the range of about 300 to about 2500 micron, and more preferably about 400 to about 600 micron.

The agent to promote the formation of a suitable filter cake may conveniently consist of particles preferably coated with substances which are wetted by the liquid metal and/or contain a fluxing agent such as a fluoride. The agent can be provided in briquette form which breaks down into particles when in contact with the liquid metal. The particles are most preferably selected and introduced so that the cake becomes deposited in layers which are non-compressible as a result of which the cake is itself inherently porous and the pores of the ceramic filter remain sufficiently open that metal can flow through without significant change in metallostatic head. (Δh).

Preferably the ceramic porous filter is located in one chamber which is separated by a partition defining an under weir in liquid communication with a second chamber into which grain refining agent is introduced, which will preferably be in a wire form. Preferably the wire is fed into the second chamber countercurrent to the direction of flow of the metal to promote good mixing and dissolution, i.e. so that the grain refining agent becomes substantially uniformly distributed in the metal within a mixing chamber adjacent or spaced from the filtration chamber without any adverse reactions taking place.

The mixing is effected to disperse the grain refining agent within the liquid melt in such a way as to prevent agglomeration of particles of the grain refining agent and to encourage a uniform distribution of the agent through the liquid melt, and to separate out any non-metallic inclusions emanating from the grain refiner or any other source. We have surprisingly found that good metal mixing effected in this 'mechanical' manner (and without supplementary mixing means) is more effective than a secondary stage filter.

The invention extends to filter apparatus comprising two or three chambers, such as for example filter apparatus including communicating chambers, a first chamber having an inlet and the second chamber having an outlet, a porous filter, preferably a ceramic filter, being present in the first chamber, and a grain refining agent being present in the second chamber which can be arranged with a series of baffles or other means of controlling flow, e.g. a cyclone, to mix the grain refining agent whilst simultaneously and/or sequentially separating out any undesirable particles such as said non-metallic inclusions from the liquid metal. A cyclone component is one example of a part of the apparatus specifically designed to induce swirl flow in the flowing, filtered and grain refined liquid metal, while simultaneously separating out unwanted particulate matter.

In order that the invention may be illustrated, more easily appreciated and readily carried into effect by those skilled in the art, embodiments of it will now be described by way of non-limited example only with reference to the accompanying diagrammatic drawings in which:
Figure 1 shows a vertical section through one form of apparatus according to the invention; and
Figure 2 shows an enlarged vertical section of a non-compressible filter cake, formed in use of apparatus depicted in Figure 1.

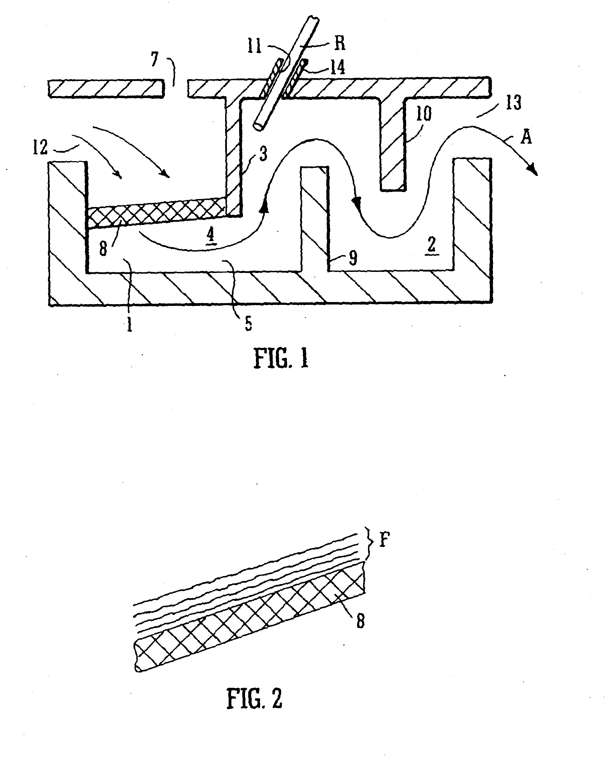

Referring to the drawings and firstly to Figure 1 thereof, the apparatus comprises a filter box comprising a first chamber 1 and a second chamber 2 separated by a partition 3 dimensioned to define an underweir 4 in collaboration with the floor 5. The chambers have a roof 6 with an inlet 7 for the introduction of an agent for forming the filter cake F, (Figure 2). The first chamber 1 contains a porous ceramic filter plate or block 8. The inlet 7 in the roof 6 is vertically above the filter 8. The agent for forming the nature of the filter cake preferably provides relatively large particles which settle on the top of the filter (and on successive layers of material thereto) and tend to hold the layers apart, i.e. prevent being compressed. As a result, the filter cake tends to have a more open, i.e. porous structure, and there is less likelihood of the pores of the filter itself becoming blocked. As a result the life of the filter is prolonged and the nature of the filter cake is improved.

The second chamber 2 contains baffles 9 and 10, standing up from the floor 5 or depending from the roof 6, respectively. An inlet 11 in the roof 6 above the second chamber 2 has a guide tube 14 which receives a grain refining agent R in wire form. The inlet 11 is inclined to the vertical so that the wire enters the second chamber 2 in a direction countercurrent to the flow of the metal melt.

In use, the liquid metal flows under gravity from the inlet 12 of the first chamber 1 to an outlet 13 of the second chamber 2 in the direction shown by the arrow A. As the molten metal flows over the filter plate 8 the filter cake agent is caused to fall via the roof inlet 7 to join the flowing liquid metal. The particles settle on the plate 8 to form the filter cake F in layers which are uncompressed so that they do not form a solid impenetrable barrier. As a result the filter continues to function and there is little change in the metallostatic head above the filter 8. The filtered metal flows from the filter 8 via the underweir 4 into the second chamber 2, where the adjacent end of the wire R is melted to release the grain refining agent. The filtered metal entraining the grain refining agent is subjected to flow modification by being passed between the baffles 9 and 10 where there is good 'mechanical' mixing in the absence of further mixing means as a result of which the grain refining agent becomes well dispersed throughout the liquid metal. The metal leaves via the outlet 13 to be cast.

### Example 1

An apparatus as described above in relation to Figure 1 was constructed and operated using AA1050 aluminium alloy prepared from potline metal and wire form grain refiner of the type 5:1 titanium boron composition such that the ceramic filter was operated in 'filter-cake' mode in which the filtrate, i.e. the exit metal flow was significantly improved. A casting trial was carried out on an experimental casting unit with a casting rate of 8 tonnes/hr and a drop size of 11 tonnes. Measurements of inclusion content were made by using two LiMCA particulate counting devices, one placed before the apparatus and the other located after the apparatus. Table 1 below provides the LiMCA particulate evaluations for the casting trial demonstrating improvements of the order tenfold in terms of the outlet particle count compared to standard performance expected from a ceramic filter used according to current industry practise.

| Incoming | Exit |
|---|---|
| N15 12,000 | 500 - 1,000 counts |
| N20 8,000 | 200 - 500 counts |
| STANDARD | |
| N20 10,000 | 5,000 |

### Example 2

The apparatus and procedure of Example 1 was repeated several times each using different alloy compositions. By corresponding control of filter cake accumulation, it was found that the ceramic filter was re-usable for a minimum of three times for the different alloy types including AA1000 series, AA3000 series and AA 5000 series alloys whilst maintaining the same high levels of filtration efficiency.

The porous filter is long lasting because the nature of the filter cake allows its continued use over a prolonged period. Our investigations have shown that by control of the nature of the filter cake the reliability and efficiency of the filter is improved with filter life being increased at least threefold whilst achieving and sustaining remarkably high levels of filtration efficiency in excess of 90% for a wide range of different types of alloy. The metal produced is well refined, containing a very low level of particulates (in the range of 200 to 500 counts/kg) and importantly containing no particulates greater than 40 micron in size, particles greater than this size having been substantially removed by modification of the metal flow.

## Claims

1. A method of refining a metal melt comprising passing liquid metal through a porous filter whilst adding filter cake forming agent to a flow of liquid metal, subjecting the filtered metal to grain refinement by addition of grain refining agent with simultaneous admixing of liquid metal with said grain refining agent followed by separation of at least some particulate matter from the flow of liquid metal wherein the admixing of liquid metal and separation of the particulate matter is effected through liquid metal flow modification and the liquid metal flow is subjected to only one filtration stage.

2. A method as claimed in Claim 1 in which the admixing of liquid metal and/or separation of particulate matter is effected through liquid metal flow modification.

3. A method as claimed in either preceding Claim, wherein the metal to be refined is a light metal such as aluminium or an alloy comprising aluminium.

4. A method as claimed in any preceding Claim in which the porous filter comprises a ceramic block or plate

5. A method as claimed in any preceding Claim in which the pore dimensions of the porous filter are in the range of about 300 to about 2,500 micron.

6. A method as claimed in any preceding Claim in which the filter cake formation agent consists of particles coated with substances wetted by the liquid metal and/or containing a fluxing agent such as a fluoride.

7. A method as claimed in any preceding Claim in which the filter cake becomes formed in layers which are non-compressible.

8. A method as claimed in any preceding Claim in which the porous filter is located in one chamber separated from another chamber into which the grain refining agent is introduced.

9. A method as claimed in Claim 8, in which the said chambers are adjacent.

10. A method as claimed in Claim 8 to 9, in which the grain refining agent is fed into the said another chamber countercurrent to the direction of flow of the liquid metal.

11. A method as claimed in any preceding Claim, in which separation of said particulate matter is achieved by the presence of baffle plates modifying the path of flow of the liquid metal.

12. A method as claimed in any preceding Claim, in which separation of said particulate matter is achieved in means generating swirl flow in the liquid metal, such as within a cyclone.

13. A method as claimed in any preceding Claim, wherein particulates greater than 40 micron in size are substantially removed from the grain refined metal.

14. Apparatus for carrying into effect a method as claimed in any one of Claims 1 to 11 the apparatus comprising a primary compartment receiving an inlet flow of liquid metal and including filtration means in the form of a porous filter adapted to support a build-up of filter cake, means introducing into the said primary compartment filter cake controlling agent, and a secondary compartment adjacent to or spaced from the primary compartment receiving a flow of filtered liquid metal and including an inlet for grain refining agent, the apparatus incorporating means for admixing of the flowing filtered liquid metal with introduced grain refining agent and separating at least some particulate matter from the filtered and grain refined liquid metal flow after admixture with the grain refining agent by liquid metal flow modification, wherein the apparatus contains a single filtration means.

15. Apparatus as claimed in Claim 14, in which the porous filter is located at and defines the base of the metal feed inlet compartment within the primary chamber.

16. Apparatus as claimed in Claim 14 and 15, in which the grain refining agent inlet is angled at an acute angle with respect to the secondary compartment causing intimate admixture of the grain refining agent with flowing filtered liquid metal.

17. Apparatus as claimed in any one of Claims 14 to 16, including a plurality of baffle plates effecting modification to the flow of liquid metal towards an exit of the apparatus.

18. Apparatus as claimed in any one of Claims 14 to 17, including means for generating swirl flow inducing separation of at least some particulate matter from flowing filtered and grain refined liquid metal.

## Patentansprüche

1. Verfahren zum Raffinieren einer Metallschmelze, welche das Übergeben des flüssigen Metalls durch ein Porenfilter beinhaltet, während ein Mittel zur Formung eines Filterkuchens einem Strom des flüssigen Metalls hinzugegeben wird, Unterwerfen des gefilterten Metalls einer Kornfeinung durch Hinzufügen eines Kornfeinungsmittels unter gleichzeitigem Beimischen von flüssigem Metall mit dem Kornfeinungsmittel und nachfolgender Trennung von wenigstens einigem Partikelmaterial aus dem Strom des flüssigen Metalls, wobei das Beimischen des flüssigen Metalls und die Trennung des Partikelmaterials durch Modifikation des Flüssigmetallstroms bewirkt wird und der Flüssigmetallstrom nur einer Filterstufe unterworfen wird.

2. Verfahren nach Anspruch 1, bei dem das Beimischen von flüssigem Metall und/oder die Trennung des Partikelmaterials durch eine Strommodifikation des Flüssigmetalls ausgeführt wird.

3. Verfahren nach einem der vorhergehenden Ansprüche, bei dem das zu raffinierende Metall ein leichtes Metall wie Aluminium oder eine Legierung, die Aluminium enthält, ist.

4. Verfahren nach einem der vorhergehenden Ansprüche, bei dem der Porenfilter einen Keramikblock oder eine Platte enthält.

5. Verfahren nach einem der vorhergehenden Ansprüche, bei dem die Porendimensionen des Porenfilters im Bereich zwischen 300 und 2500 Mikron betragen.

6. Verfahren nach einem der vorhergehenden Ansprüche, bei dem das Mittel zur Filterkuchenbildung aus Partikeln besteht, die mit Substanzen beschichtet sind, die durch das Flüssigmetall und/oder einem Flussmittel, wie z. B. Fluorid, benetzt werden.

7. Verfahren nach einem der vorhergehenden Ansprüche, bei dem der Filterkuchen in nicht kompressiblen Schichten gebildet wird.

8. Verfahren nach einem der vorhergehenden Ansprüche, bei dem der Porenfilter in einer Kammer angeordnet ist, die von einer anderen Kammer getrennt ist, in die das Mittel zur Kornfeinung eingeführt wird.

9. Verfahren nach Anspruch 8, bei dem die Kammern nebeneinander liegen.

10. Verfahren nach Anspruch 8 bis 9, bei dem das Mittel zur Kornfeinung in die andere Kammer eingeführt wird, die der Stromrichtung des Flüssigmetalls gegenüber liegt.

11. Verfahren nach einem der vorhergehenden Ansprüche, bei dem die Trennung des Partikelmaterials bei Vorhandensein von Ablenkplatten erfolgt, die den Stromweg des flüssigen Metalls modifizieren.

12. Verfahren nach einem der vorhergehenden Ansprüche, bei dem die Trennung des Partikelmaterials durch Mittel zur Erzeugung eines Wirbelstroms in dem Flüssigmetall erreicht wird, wie z. B. einem Zyklon.

13. Verfahren nach einem der vorhergehenden Ansprüche, bei dem Partikel größer als 40 Mikron im Wesentlichen aus dem korngefeinten Metall entfernt werden.

14. Einrichtung zur Durchführung eines Verfahrens nach einem der Ansprüche 1 - 11, wobei der Einrichtung wenigstens eine erste Kammer zur Aufnahme eines Einlassstroms von flüssigem Metall und Filtermittel in Form eines Porenfilters enthält, der so ausgebildet ist, dass er einen sich aufbauend gebildeten Filterkuchen trägt, Mittel zur Einführung eines den Filterkuchen steuernden Mittels in die erste Kammer, mit einer zweiten Kammer neben der oder in Abstand zur ersten Kammer zur Aufnahme eines Stroms von gefiltertem Flüssigmetall, welche einen Einlass für ein Kornfeinmittel enthält, wobei die Einrichtung Mittel zur Beimischung von eingeführtem Kornfeinmittel zum strömenden gefilterten Flüssigmetall aufweist, und Trennung von wenigstens einigem Partikelmaterial aus dem gefilterten und korngefeinten Flüssigmetallstrom nach Beimischung des Mittels zur Kornfeinung durch Flüssigkeitsstrommodifikation, wobei die Einrichtung ein einzelnes Filtermittel aufweist.

15. Einrichtung nach Anspruch 14, bei dem der Porenfilter an der Basis des Metallzufuhreinlasses angeordnet ist und die Basis der Metallzufuhreinlasskammer in der ersten Kammer bildet.

16. Einrichtung nach Anspruch 14 und 15, bei der der Einlass für das Kornfeinungsmittel in einem spitzen Winkel in Bezug auf die zweite Kammer steht, welches zu einer innigen Beimischung des Mittels zur Kornfeinung mit dem flüssigen gefilterten Metall führt.

17. Einrichtung nach einem der Ansprüche 14 - 16, welche eine Mehrzahl von Ablenkplatten enthält, die die Modifikation des Stroms von Flüssigmetall in Richtung eines Ausgangs der Einrichtung aufweist.

18. Einrichtung nach einem der Ansprüche 14 - 17, welche Mittel zur Erzeugung einer durch Wirbelstrom induzierten Trennung von wenigstens einigem Partikelmaterial aus dem gefilterten fließenden und korngefeinten Flüssigmetall enthält.

## Revendications

1. Procédé d'affinage d'un bain de métal fondu consistant à faire passer un métal liquide à travers un filtre poreux tout en ajoutant un agent formant gâteau de filtre à un écoulement de métal liquide, soumettre le métal filtré à un affinage de grain par l'addition d'un agent d'affinage de grain avec un mélange simultané du métal liquide avec ledit agent d'affinage de grain suivi par la séparation d'au moins certaines matières particulaires de l'écoulement de métal liquide, où le mélange de métal liquide et la séparation des matières particulaires sont effectués par la modification de l'écoulement du métal liquide et l'écoulement de métal liquide est soumis à une seule étape de filtration.

2. Procédé selon la revendication 1, dans lequel le mélange du métal liquide et/ou la séparation des matières particulaires est effectué par modification de l'écoulement du métal liquide.

3. Procédé selon l'une quelconque des revendications précédentes, où le métal destiné à être affiné est un métal léger tel que de l'aluminium ou un alliage comprenant de l'aluminium.

4. Procédé selon l'une quelconque des revendications précédentes, où le filtre poreux comprend un bloc ou une plaque de céramique.

5. Procédé selon l'une quelconque de revendications précédentes, où les dimensions des pores du filtre poreux sont comprises dans le domaine d'environ 300 à environ 2500 microns.

6. Procédé selon l'une quelconque des revendications précédentes, dans lequel l'agent de formation de gâteau de filtre consiste en particules revêtues de substances mouillées par le métal liquide et/ou contenant un agent fondant tel qu'un fluorure.

7. Procédé selon l'une quelconque des revendications précédentes, dans lequel le gâteau de filtre est formé de couches qui sont non compressibles.

8. Procédé selon l'une quelconque des revendications précédentes, dans lequel le filtre poreux est situé dans une chambre séparée d'une autre chambre dans laquelle l'agent d'affinage de grain est introduit.

9. Procédé selon la revendication 8, dans lequel lesdites chambres sont adjacentes.

10. Procédé selon la revendication 8 à 9, dans lequel l'agent d'affinage de grain est introduit dans ladite autre chambre à contre-courant par rapport à la direction d'écoulement du métal liquide.

11. Procédé selon l'une quelconque des revendications précédentes, dans lequel la séparation desdites matières particulaires est obtenue par la présence de déflecteurs modifiant le trajet d'écoulement du métal liquide.

12. Procédé selon l'une quelconque des revendications précédentes, dans lequel la séparation desdites matières particulaires est obtenue au moyen de la génération d'un écoulement turbulent dans le métal liquide, tel que dans un cyclone.

13. Procédé selon l'une quelconque des revendications précédentes, où les particules de taille supérieure à 40 microns sont sensiblement éliminées du métal à grain affiné.

14. Appareil pour mettre en oeuvre un procédé selon l'une quelconque des revendications 1 à 11, l'appareil comprenant un compartiment principal recevant un écoulement d'entrée de métal liquide et comprenant des moyens de filtration sous la forme d'un filtre poreux adapté pour supporter une accumulation de gâteau de filtre, des moyens d'introduction dans ledit compartiment principal d'un agent de régulation du gâteau de filtre, et un compartiment secondaire adjacent à ou éloigné du compartiment principal recevant un écoulement de métal liquide filtré et comprenant une entrée d'agent d'affinage de grain, l'appareil incorporant des moyens pour mélanger le métal liquide filtré circulant avec un agent d'affinage de grain introduit et pour séparer au moins certaines matières particulaires de l'écoulement de métal liquide filtré et à grain affiné après mélange avec l'agent d'affinage de grain par modification de l'écoulement du métal liquide, où l'appareil contient un seul moyen de filtration.

15. Appareil selon la revendication 14, dans lequel le filtre poreux est situé à la base et définit la base du compartiment d'entrée d'alimentation de métal dans la chambre principale.

16. Appareil selon les revendications 14 et 15, dans lequel l'entrée d'agent d'affinage de grain est orientée selon un angle aigu par rapport au compartiment secondaire conduisant au mélange étroit de l'agent d'affinage de grain avec le métal liquide filtré circulant.

17. Appareil selon l'une quelconque des revendications 14 à 16, comprenant une pluralité de déflecteurs effectuant la modification de l'écoulement du métal liquide vers une sortie de l'appareil.

18. Appareil selon l'une quelconque des revendications 14 à 17, comprenant des moyens pour générer un écoulement turbulent conduisant à la séparation d'au moins certaines matières particulaires du métal liquide circulant filtré et à grain affiné.
